# EUROPÄISCHE PATENTSCHRIFT

(11) **EP 3 760 428 B1**
(45) Veröffentlichungstag und Bekanntmachung des Hinweises auf die Patenterteilung: **05.10.2022**
(21) Anmeldenummer: 20179954.1
(22) Anmeldetag: 15.06.2020
(51) Int. Cl.: B32B 3/18, B29C 70/20, B32B 3/06, B32B 3/26, B32B 5/02, B32B 5/06, B32B 5/12, B32B 5/26, B32B 7/05, E04C 2/10, E04C 2/34

(54) **VERBUNDBAUTEIL UND VERFAHREN ZUM HERSTELLEN EINES VERBUNDBAUTEILS**
COMPOUND COMPONENT AND METHOD FOR MANUFACTURING SAME
COMPOSANT COMPOSITE ET PROCÉDÉ DE FABRICATION D'UN COMPOSANT COMPOSITE

(30) Priorität: 05.07.2019 DE 102019118298
(43) Veröffentlichungstag der Anmeldung: 06.01.2021
(73) Patentinhaber: Technische Universität Dresden, 01069 Dresden (DE)
(72) Erfinder: VORHOF, Michael, 01159 Dresden (DE); SCHEGNER, Philipp, 01277 Dresden (DE); HOFFMANN, Gerald, 01612 Nünchritz (DE); CHERIF, Chokri, 01219 Dresden (DE)
(74) Vertreter: Viering, Jentschura & Partner mbB Patent- und Rechtsanwälte

(56) Entgegenhaltungen:
- DE-A1- 10 228 406
- DE-A1-102004 062 895

## Beschreibung

Die Erfindung betrifft ein Verbundbauteil gemäß Anspruch 1 und ein Verfahren zum Herstellen eines Verbundbauteils gemäß Anspruch 15.

Im Allgemeinen können Verbundbauteile mehrere voneinander verschiedene Strukturen aufweisen. Die Strukturen können beispielsweise aus dem gleichen Material bestehen und in verschiedenen geometrischen Formen ausgestaltet sein, die gleichen geometrischen Formen jedoch voneinander verschiedene Materialien aufweisen, oder sich sowohl in dem Material als auch in der geometrischen Ausgestaltung voneinander unterscheiden. In verschiedenen Anwendungsgebieten können Verbundbauteile zum Einsatz kommen, die beispielsweise einen sogenannten Sandwichaufbau aufweisen. Ein Sandwichaufbau kann mindestens zwei Decklagen aufweisen zwischen denen mindestens eine Kernlage angeordnet ist. Beispielsweise können die Decklagen eines Verbundbauteils als flächige Strukturen ausgebildet sein und die Kernlage kann entsprechend zwischen den Decklagen beispielsweise in Form einer Wabenstruktur oder Ähnlichem ausgebildet sein.

Gemäß verschiedenen Ausführungsformen kann beispielsweise ein Verbundbauteil bereitgestellt sein oder werden, welches in Leichtbauweise ausgestaltet sein kann, insbesondere kann das Verbundbauteil einen Sandwichaufbau aufweisen. Das Verbundbauteil kann eine druck- und schubstabile Kernlage aufweisen, welche zwischen zwei vergleichsweise dünnen bzw. weniger steifen Decklagen angeordnet ist. Die Decklagen können einen Faserwerkstoff aufweisen, z.B. ein Gewebe oder einen Gewebeverbund. Die Kernlage kann aus formstabilen dreidimensional ausgestalteten Bändern gebildet sein oder werden. Das Verbundbauteil kann beispielsweise als Paneel (z.B. als Sandwichpaneel) ausgestaltet sein oder eine paneelartige Struktur aufweisen.

Im Allgemeinen können Steifigkeit und/oder Tragfähigkeit solcher Strukturen je nach Dicke der Kernlage um ein Vielfaches gegenüber dem einfachen Einsatz an Decklagenmaterial gesteigert werden. Verbundbauteile in einer derartigen Leichtbauweise können daher verbreitet Anwendung finden, z.B. in einer Vielzahl an Leichtbauanwendungen in Luft- und Raumfahrt, im Schienen- und Kraftfahrzeugbau, im Maschinen- und Anlagenbau, im Hoch- und Tiefbau, Schiffsbau, Möbelindustrie, Bauindustrie, Innenausbau, Behälterbau etc.

Herkömmlicherweise können Decklagen derartiger Verbundbauteile aus faserverstärkten Kunststoffen gebildet sein, wobei als Kernlagen Wabenkerne, Faltkerne und Schaumkerne etabliert sind. Weitere Möglichkeiten bestehen in der Nutzung von textilen Abstandstrukturen, wie Abstandsgewirken und -geweben. Wesentliche limitierende Faktoren in der Stabilität von Sandwichstrukturen können einerseits die Anbindung von Kern- und Decklage aneinander sein sowie andererseits die Druck- bzw. Schubstabilität der Kernlage. In diesem Wechselspiel aus Formen und Materialien ergeben sich komplexe Zusammenhänge, welche letztlich beispielsweise die mechanischen Eigenschaften der Verbundbauteile, die Haltbarkeit der Verbundbauteile, etc. definieren, wie nachfolgend an verschiedenen Beispielen näher erläutert wird.

Waben- und Faltkerne können aus Verstärkungsfasern, wie z.B. Aramid, hergestellt sein oder werden. Schaumkerne können aus Polymeren bzw. Metallen vorgefertigt sein. Sowohl Waben- und Faltkerne, als auch Schaumkerne können mit den Decklagen unter Anwendung von Klebe- bzw. Schweißprozessen gefügt werden. Bei Abstandstextilien (z.B. Gewirken oder Geweben) können die Decklagen über ein Abstandsfadensystem miteinander verbunden sein oder werden. Im Allgemeinen bieten Waben- und Faltkerne vergleichsweise hohe Kernstabilitäten (bezüglich Schub und Druck), sind jedoch herkömmlicherweise mittels einer Klebeverbindung entlang der Kernwände mit den Decklagen verbunden, wobei die Fügefläche daher sehr klein ist und das Sandwichbauteil dadurch hinsichtlich seiner mechanischen Leistungsfähigkeit durch Delamination limitiert sein kann. Die Herstellung von Sandwichbauteilen mit Waben- und Faltkernen erfolgt zudem herkömmlicherweise sequentiell und die Güte der Klebeverbindung kann nur mit hohem Aufwand (Sonografie, Röntgen) im Nachhinein feststellbar sein. Herkömmliche textile Strukturen können, basierend auf dem verwendeten Abstandsfadensystem, zwar eine bessere Anbindung der Decklagen bieten, weisen jedoch in herkömmlicher Ausgestaltung ebenfalls spezifische Nachteile auf. Beispielsweise können die Abstandsfäden aufgrund der Einbindung zwischen den Decklagen mit einer inhärenten Biegung in der Sandwichmitte vorliegen und können daher empfindlich gegenüber Knicken sein. Diese weisen somit herkömmlicherweise nur eine geringe Druckstabilität auf. Die Schubstabilität kann zudem herkömmlicherweise nur mittels der Anordnung der Abstandsfäden eingestellt werden, was bei Geweben jedoch nur in Längsrichtung bzw. bei Gewirken nur in Querrichtung möglich sein kann. Auch kann beispielsweise ein Drahtgewebe als Kernlage zum Einsatz kommen, wobei allerdings die Drähte des Drahtgewebes herkömmlicherweise einen runden Querschnitt aufweisen und somit gegenüber den Flächen von Wabenkernen eine deutlich geringere Biegesteifigkeit und Schubstabilität aufweisen. Je nach Material, insbesondere bei Polymeren, sind Schaumkerne zwar günstig herstellbar, bieten allerdings herkömmlicherweise nur eine geringe Druck- und Schubstabilität und sind herkömmlicherweise mittels einer Kleb- bzw. Schweißverbindung an die Decklagen gekoppelt und können daher bei Belastung ebenfalls zu einer Delamination zwischen Kern und Decklage neigen. DE 10 2004 062895 A1 betrifft eine Textilabstandsstruktur für mehrlagige sandwichartige Elemente in Leichtbauweise, wobei wenigstens eine flache textile Bahn und wenigstens eine wellenförmig gefaltete textile Bahn aufeinanderliegend wenigstens teilweise miteinander vernäht werden. Dabei wird die wellenförmig gefaltete textile Bahn mehrfach geknickt, wobei sich die Knickkanten senkrecht zur flachen textilen Bahn erstrecken.

Erfindungsgemäß wird ein Verbundbauteil mit einem Sandwichaufbau bereitgestellt, basierend auf einer formschlüssigen, faserbasierten/bindungstechnischen Einkopplung von geknickten (mit anderen Worten gefalteten) Bändern in zwei Decklagen. Die zwei Decklagen weisen ein Gewebe auf oder bestehen daraus. Die geknickten Bänder können ein Verstärkungsmaterial aufweisen oder daraus bestehen und als Kernlage zwischen den zwei Decklagen eingekoppelt sein.

Gemäß verschiedenen Ausführungsformen kann das hierin beschriebene Verbundbauteil derart ausgestaltet sein, dass gleichzeitig sowohl mindestens zwei Gewebelagen mit hoher Webleistung hergestellt werden können, während in dem gleichen Webprozess auch die Bänder geknickt (mit anderen Worten gefaltet) und faserbasiert/bindungstechnisch in die zwei Gewebelagen eingekoppelt werden.

Gemäß verschiedenen Ausführungsformen können die zum Bilden der Kernlage verwendeten Bänder flächige Abschnitte aufweisen, die sich jeweils zwischen entsprechenden Knickkanten oder Knickbereichen des jeweiligen Bandes erstrecken. Insbesondere daher, dass bei einer Biegung eines Verbundbauteils mit einem Sandwichaufbau Teilflächen um eine senkrecht durch diese Teilflächen hindurch verlaufende Biegeachse gebogen werden können, kann eine hohe Biegesteifigkeit aufgrund des Einsatzes flächiger Strukturen in der Kernlage erreicht werden. Die Ausrichtung der Bänder sowie der Knickkanten kann die Isotropie/Anisotropie der Biegesteifigkeit des Verbundbauteils beeinflussen bzw. definieren. Beispielsweise kann eine isotropere Biegesteifigkeit erreichet werden, wenn sich die Knickkanten nicht alle parallel zu einer Richtung (z.B. zu der Schuss- und/oder zu der Kettrichtung) erstrecken.

Das erfindungsgemäße Verbundbauteil weist Folgendes auf: eine erste Decklage aufweisend ein erstes Gewebe; eine zweite Decklage aufweisend ein zweites Gewebe, wobei das erste Gewebe und das zweite Gewebe eine Kettrichtung und eine Schussrichtung definieren; mehrere Bänder, welche zwischen den beiden Decklagen angeordnet sind, wobei sich jedes der mehreren Bänder entlang der Kettrichtung erstreckt und (anschaulich textiltechnisch, z.B. webtechnisch) mit dem jeweiligen Gewebe der beiden Decklagen formschlüssig verbunden ist, wobei jedes der mehreren Bänder mehrfach geknickt ist und wobei sich die in dem jeweiligen Band ausgebildeten Knickkanten schräg zu der Kettrichtung und/oder schräg zu der Schussrichtung erstrecken.

Das erfindungsgemäße Verfahren zur Herstellung des Verbundbauteils weist Folgendes auf: Führen mehrerer Bändern in einer Führungsebene einer Prozessiervorrichtung (z.B. einer Webvorrichtung) entlang einer Führungsrichtung (z.B. entlang der Kettrichtung), wobei jedes der mehreren Bänder vordefinierte Knickbereiche aufweist, welche derart in dem jeweiligen Band ausgebildet sind, dass diese schräg zu der Führungsrichtung verlaufen; Herstellen eines Abschnittes einer ersten Gewebelage mittels der Prozessiervorrichtung (z.B. Weben eines Abschnittes einer ersten Gewebelage mittels der Webvorrichtung); Verbinden der mehreren Bänder mit der ersten Gewebelage, wobei ein erster Befestigungsabschnitt jedes Bandes der mehreren Bänder mit dem ersten Gewebe verbunden wird; Knicken der mehreren Bänder in den vordefinieren Knickbereichen, wobei ein Verbindungsabschnitt jedes Bandes der mehreren Bänder, welcher an den ersten Befestigungsabschnitt angrenzt, aufgestellt wird; Herstellen eines Abschnittes einer zweiten Gewebelage mittels der Prozessiervorrichtung (z.B. Weben eines Abschnittes einer zweiten Gewebelage mittels der Webvorrichtung); und Verbinden der Bänder mit der zweiten Gewebelage, wobei ein zweiter Befestigungsabschnitt jedes Bandes der mehreren Bänder, der an den Verbindungsabschnitt angrenzt, mit dem zweiten Gewebe verbunden wird, wobei sich der Verbindungsabschnitt des jeweiligen Bandes von der ersten Gewebelage zu der zweiten Gewebelage erstreckt. Ausführungsbeispiele sind in den Figuren dargestellt und werden im Folgenden näher erläutert.

Es zeigen
Figuren 1A bis 1C ein Verbundbauteil in verschiedenen schematischen Ansichten, gemäß verschiedenen Ausführungsformen;
Figur 2 ein Verbundbauteil in einer schematischen Perspektivansicht, gemäß verschiedenen Ausführungsformen;
Figuren 3A bis 3C jeweils eine schematische Perspektivansicht einer Anordnung und Ausgestaltung von Bändern eines Verbundbauteils, gemäß verschiedenen Ausführungsformen;
Figur 4 eine schematische Perspektivansicht eines Verbundbauteils und in einer Ebene geführte Bänder, gemäß verschiedenen Ausführungsformen; und
Figur 5 ein schematisches Ablaufdiagramm eines Verfahrens zum Herstellen eines Verbundbauteils, gemäß verschiedenen Ausführungsformen.

Verschiedene Aspekte der hierin beschriebenen Ausführungsformen beziehen sich auf eine formschlüssige Anbindung einer aus Bändern gebildeten Kernlage zwischen gewebten Decklagen. Die Bänder können geknickt (mit anderen Worten gefaltet) sein bzw. entlang vordefinierter Knickbereiche (auch als Faltbereiche bezeichnet) aufgestellt werden. Aufgrund des bandförmigen Aufbaus der Kernlage kann der resultierende Faltkern auf einfache Weise angepasst werden, z.B. besteht eine Variabilität in der Faltung der Bänder und/oder der Einbindung der Bänder in den Gewebelagen. Das hierin beschriebene Einkoppeln der Bänder in ein Gewebe einer Decklage ist beispielsweise derart ausgestaltet, dass dieses an Standardwebmaschinen umsetzbar ist. Aufgrund der Formgebung der gefalteten Bändchen, welche die Kernlage oder zumindest einen Teil der Kernlage bilden, können in dem Sandwichverbundbauteil hohe Schub- und Druckstabilitäten in Längs- und Querrichtung erzielt werden, was beispielsweise unter Verwendung herkömmlicherweise erzeugter textiler Abstandstrukturen nicht möglich sein kann. Die Verbindung zwischen der Kernlage und den Decklagen kann zudem formschlüssig erfolgen mit durchgehender Faserverstärkung und somit belastbarer sein als eine geklebte Fügeverbindung.

Gemäß verschiedenen Ausführungsformen wird eine integral gefertigte Sandwichstruktur bereitgestellt bzw. ein integral gefertigtes Verbundbauteil mit einem Sandwichaufbau. Aufgrund der integralen Fertigung kann beispielsweise Folgendes erzielt werden:
o eine hohe Automatisierbarkeit,
o eine hohe Reproduzierbarkeit der Bauteilqualität, und/oder
o eine hohe Produktivität der Sandwichfertigung.

Aufgrund der faserbasierten bzw. faserverstärkten Anbindung zwischen der Kernlage, gebildet aus den Bändern, und den Decklagen kann beispielsweise Folgendes erzielt werden:
o eine hohe Stabilität des Sandwichverbundes,
o eine hohe Materialeffizienz,
o ein hohes Leichtbaupotenzial, und/oder
o ein Vermeiden oder Verringern typischer
Versagensmechanismen, wie beispielsweise einem Ablösen der Deckschicht, einem Kernknicken, der Entstehung von Falten, etc.

Aufgrund der geringen Bauteilkosten, der hohen Bauteilqualität, der Zugänglichkeit neuer Materialkombinationen, und/oder der hohen Performance können auch neue Anwendungs- und Vermarktungsfelder erschlossen werden.

Im Folgenden werden verschiedene Ausführungsformen eines Verbundbauteils und eines entsprechenden Verfahrens zum Herstellen zumindest eines Abschnittes eines Verbundbauteils beschrieben.

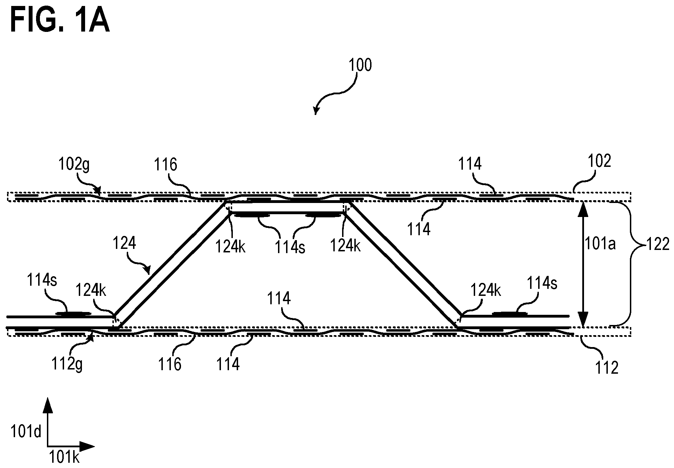

**Fig.1A** zeigt ein Verbundbauteil 100 in einer schematischen Querschnittsansicht. Das Verbundbauteil 100 weist eine erste Decklage 102 und eine zweite Decklage 112 auf. Diese sind in einem Abstand 101a voneinander angeordnet. Die beiden Decklagen 102, 112 können parallel zueinander angeordnet sein. Zwischen den beiden Decklagen 102, 112 ist eine Kernlage 122 ausgebildet.

Die Kernlage 122 weist eine Vielzahl von Bändern 124 auf oder besteht daraus. Die Bänder 124 können gemäß verschiedenen Ausführungsformen abschnittsweise formschlüssig, faserbasiert/bindungstechnisch in die beiden Decklagen 102, 112 eingekoppelt sein oder werden. Anschaulich können die Bänder 124 abschnittsweise textiltechnisch mit den beiden Decklagen 102, 112 verbunden sein oder werden. Dabei weist die erste Decklage 102 ein erstes Gewebe 102g (bzw. eine erste Gewebelage) auf, oder besteht daraus. Ferner weist die zweite Decklage 102 ein zweites Gewebe 112g (bzw. eine zweite Gewebelage) auf, oder besteht daraus. Das textiltechnische Verbinden der Decklagen 102, 112 mit den dazwischen angeordneten Bändern 124 kann während der Herstellung der Gewebe 102g, 112g mittels Webens erfolgen. Alternativ dazu können beispielsweise maschenbildende Verfahren wie Stricken, Wirken, Häkeln, und/oder Nadelbinden zum textiltechnischen Verbinden der Gewebe 102g, 112g der Decklagen 102, 112 mit den dazwischen angeordneten Bändern 124 verwendet werden. Ferner kann das textiltechnische Verbinden der Gewebe 102g, 112g der Decklagen 102, 112 mit den dazwischen angeordneten Bändern 124 mittels Filzens, Flechtens, Knüpfens, oder anderen geeigneten Techniken erfolgen.

Das erste Gewebe 102g der ersten Decklage 102 kann beispielsweise in gleicher Weise ausgestaltet sein wie das zweite Gewebe 112g der zweiten Decklage 112. Zum Beispiel können diese den gleichen strukturellen Aufbau (zum Beispiel bezüglich mindestens einem der folgenden Aspekte: der Faserdichte, der Gewebebreite, der Gewebelänge, der Gewebedicke, und/oder der Bindungsart) aufweisen. Ferner können diese die gleichen Faserarten und/oder Fasermaterialien aufweisen (z.B. für das Kett-Fadensystem und/oder das Schuss-Fadensystem). Es versteht sich, dass die beiden Gewebe 102g, 112g der Decklagen 102, 112 in einem Merkmal, in mehreren Merkmalen oder in allen genannten Merkmalen auch verschieden voneinander ausgestaltet sein können.

Gemäß verschiedenen Ausführungsformen kann die jeweilige Decklage 102, 112 zusätzlich zu dem Gewebe weitere Materialen aufweisen. Beispielsweise kann das jeweilige Gewebe in ein Polymermaterial eingebettet sein.

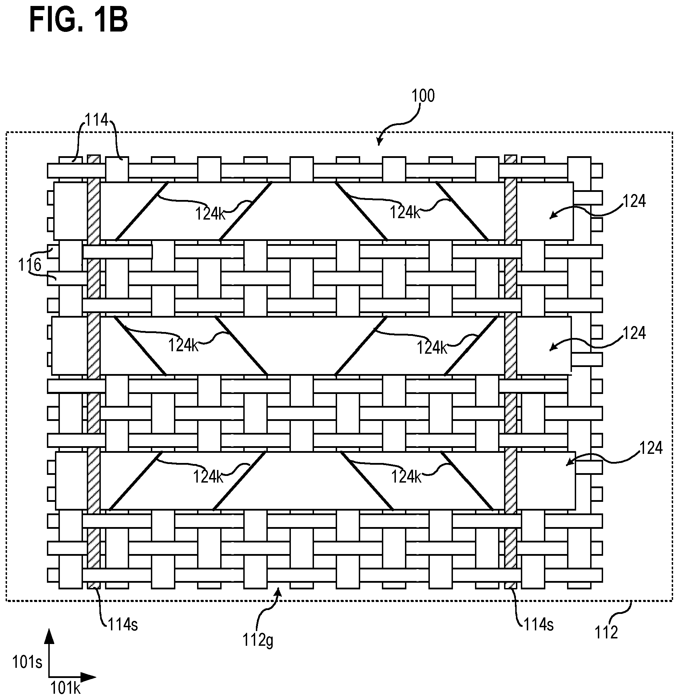

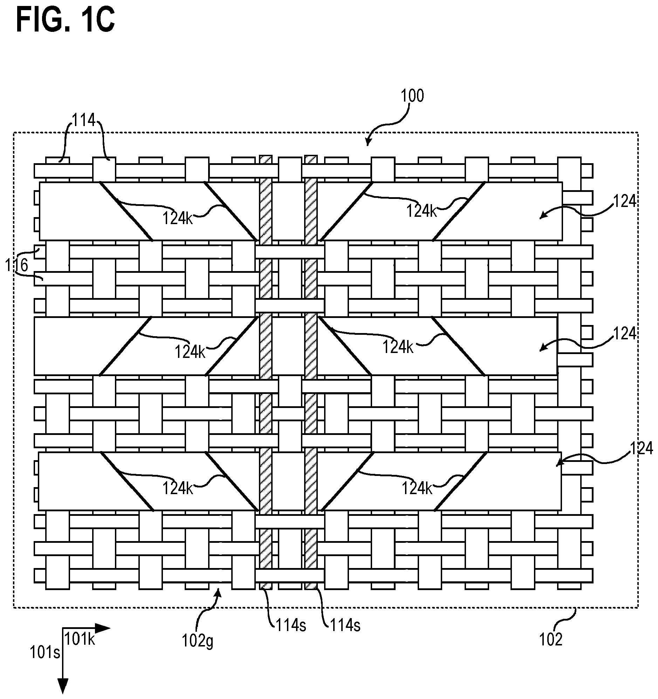

**Fig.1B** zeigt das Verbundbauteil 100 in einer schematischen Draufsicht auf die Bänder 124 und die zweite Decklage 112, anschaulich ohne die erste Decklage 102 aus einer Sicht entgegen der Richtung 101d. Ferner zeigt **Fig.1C** das Verbundbauteil 100 in einer schematischen Draufsicht auf die Bänder 124 und die erste Decklage 102, anschaulich ohne die zweite Decklage 112 aus einer Sicht entlang der Richtung 101d.

Erfindungsgemäß definieren das erste Gewebe 102g und das zweite Gewebe 112g eine Kettrichtung 101k und eine Schussrichtung 101s.

Die beiden Gewebe 102g, 112g können beispielsweise entsprechend relativ zueinander ausgerichtet sein oder werden. Gemäß verschiedenen Ausführungsformen können die beiden Gewebe 102g, 112g in einem gemeinsamen Webprozess mittels einer Webvorrichtung gebildet werden.

Erfindungsgemäß erstreckt sich jedes Band der mehreren Bänder 124 entlang der Kettrichtung 101k.

Dies ermöglicht beispielsweise das effiziente Ausbilden einer textiltechnischen Verbindung der Bänder 124 mit dem jeweiligen Gewebe 102g, 112g der beiden Decklagen 102, 112.

Erfindungsgemäß ist jedes Band der mehreren Bänder 124 mehrfach geknickt bzw. weist mehrere Knickbereiche auf in denen das jeweilige Band geknickt ist. Dementsprechend sind Knickkanten 124k in dem jeweiligen Band ausbildet. Die Knickkanten 124k verlaufen schräg zu der Kettrichtung 101k und/oder schräg zu der Schussrichtung 101s. Anschaulich sind die jeweiligen Knickbereiche der Bänder 124 schräg zu der Kettrichtung 101k und/oder schräg zu der Schussrichtung 101s längserstreckt.

Wie in Fig.1B und Fig.1C beispielhaft dargestellt ist, kann eine Formschlussverbindung zwischen jedem Band der mehreren Bänder 124 und jeweils den Fäden (z.B. den Kettfäden 116 und/oder den Schussfäden 114) des ersten Gewebes 102g und des zweiten Gewebes 112g ausgebildet sein oder werden.

Dabei kann das jeweilige Band 124 mittels mehrerer Schussfäden (siehe beispielsweise die jeweiligen Schussfäden 114s) in das jeweilige Gewebe 102g, 112g eingekoppelt sein oder werden.

Gemäß verschiedenen Ausführungsformen kann das jeweilige Gewebe 102g, 112g der Decklagen 102, 112 als Monofil-, Multifil- oder Stapelfasergarn-Gewebe ausgestaltet sein. Gemäß verschiedenen Ausführungsformen kann das jeweilige Gewebe 102g, 112g der Decklagen 102, 112 mittels eines geeigneten Filaments oder mittels mehrerer geeigneter Filamente hergestellt sein oder werden.

Gemäß verschiedenen Ausführungsformen kann jede Knickkante 124k eines Bandes 124 in einem Winkel in einem Bereich von ungefähr 15° bis 75° zu der Kettrichtung 101k verlaufen. Dabei müssen nicht alle Knickkanten 124k in die gleiche Richtung ausgerichtet sein oder parallel zueinander verlaufen. Vielmehr können die Knickkanten 124k entweder eine erste Ausrichtung aufweisen (z.B. parallel zu einer ersten Richtung) oder eine zweite Ausrichtung (z.B. parallel zu einer zweiten Richtung). Dabei können beide Ausrichtungen weder parallel zu der Schussrichtung 101s noch parallel zu der Kettrichtung 101k sein. Mit anderen Worten können die erste und die zweite Richtung nicht parallel zu der Kettrichtung 101k und/oder nicht parallel zu der Schussrichtung 101s verlaufen.

Gemäß verschiedenen Ausführungsformen kann zusätzlich zu der textiltechnischen Verbindung eine Klebeverbindung zwischen jedem der mehreren Bänder 124 und dem jeweiligen Gewebe 102g, 112g der beiden Decklagen 102, 112 ausgebildet sein oder werden. Vor dem Herstellen der Klebeverbindung kann das Verbundbauteil 100 zumindest abschnittsweise in eine vordefinierte, z.B. gekrümmte, Form gebracht werden und in dieser dann aufgrund der hergestellten Klebeverbindung auch gehalten werden. Die Klebeverbindung kann beispielsweise mittels eines aktivierbaren Klebstoffes zu einem vordefinierten Zeitpunkt mittels eines entsprechenden Aktivierens des aktivierbaren Klebstoffes erzeugt werden. Dabei kann der aktivierbare Klebstoff bereits vor dem Aktivieren zu einem beliebigen Zeitpunkt, zum Beispiel abschnittsweise, auf die Bänder 124 und/oder auf das jeweilige Gewebe 102g, 112g aufgebracht sein oder werden. Das Aktiveren des Klebstoffes kann (klebstoffspezifisch) beispielsweise erfolgen mittels Licht (z.B. UV Licht), mittels Wärme, basierend auf einer chemischen Aktivierung, oder jeder anderen geeigneten Aktivierung.

Gemäß verschiedenen Ausführungsformen kann jedes der mehreren Bänder 124 einen Faserwerkstoff aufweisen oder daraus bestehen. Anschaulich können die Bänder aus einem Papier gebildet sein. Der Faserwerkstoff kann beispielsweise Pflanzenfasern, Aramidfasern, Carbonfasern, Glasfasern, Keramikfasern, und/oder andere geeignete Fasern aufweisen. Die Fasern des Faserwerkstoffs können mittels eines Binders zusammengehalten werden. Die Fasern des Faserwerkstoffs können beispielsweise Kurzfasern oder Superkurzfasern, z.B. Fasern mit einer durchschnittlichen Faserlänge in einem Bereich von ungefähr 1 mm bis ungefähr 100 mm, aber auch Endlosfasern sein.

Gemäß verschiedenen Ausführungsformen können die Bänder 124 derart steif ausgestaltet sein, dass das Verbundbauelement 100 aufgrund der eingebrachten Bänder 124 versteift wird. Gemäß verschiedenen Ausführungsformen kann jedes der mehreren Bänder 124 derart eingerichtet sein, dass dieses mittels Knickens in eine stabile, dreidimensionale Form gebracht werden kann. Die mittels der Knickkanten 124k definierte dreidimensionale Form der Bänder 124 kann beispielsweise den Abstand 101a zwischen der ersten Decklage 102 und der zweiten Decklage 112 definieren.

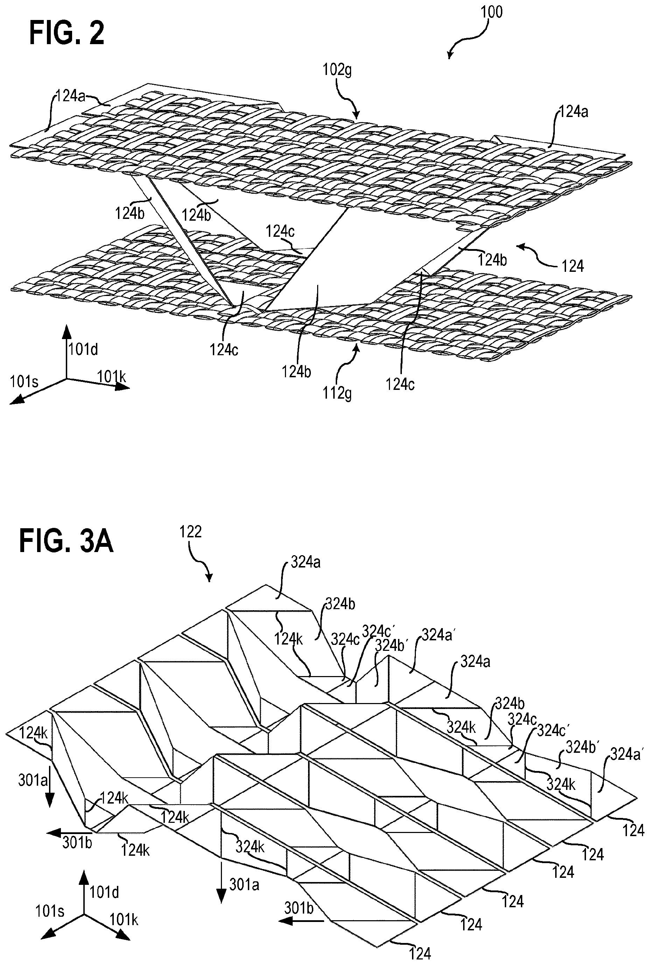

**Fig.2** veranschaulicht ein Verbundbauteil 100 in einer schematischen Perspektivansicht, gemäß verschiedenen Ausführungsformen.

Gemäß verschiedenen Ausführungsformen können die Bänder 124 des Verbundbauteils 100 derart mit den beiden an diese angrenzenden Geweben 102g, 112g verbunden sein, dass jeweils erste Bandabschnitte 124a (als erste Befestigungsabschnitte bezeichnet) eines Bandes 124 an das erste Gewebe 102g angrenzen und/oder in das erste Gewebe 102g eingearbeitet sind, dass jeweils zweite Bandabschnitte 124b (als Verbindungsabschnitte bezeichnet) eines Bandes 124 zwischen den beiden Geweben 102g, 112g angeordnet sind und sich von einem der beiden Gewebe 102g, 112g zu dem anderen erstrecken, und dass jeweils dritte Bandabschnitte 124c (als zweite Befestigungsabschnitte bezeichnet) eines Bandes 124 an das zweite Gewebe 112g angrenzen und/oder in das zweite Gewebe 112g eingearbeitet sind.

Entlang der Kettrichtung 101k können die zuvor beschriebenen ersten, zweiten und dritten Bandabschnitte 124a, 124b, 124c in einer vordefinierten Reihenfolge vorliegen, nämlich jeweils ein erster Bandabschnitt 124a, gefolgt von einem zweiten Bandabschnitt 124b, gefolgt von einem dritten Bandabschnitt 124c, gefolgt von einem weiteren zweiten Bandabschnitt 124b und erneut beginnend mit einem ersten Bandabschnitt 124a, usw. Zwischen den jeweiligen Bandabschnitten 124a, 124b, 124c (d.h. zwischen dem ersten Bandabschnitt 124a und dem angrenzenden zweiten Bandabschnitt 124b, zwischen dem zweiten Bandabschnitt 124b und dem angrenzenden dritten Bandabschnitt 124c, zwischen dem dritten Bandabschnitt 124c und dem angrenzenden weiteren zweiten Bandabschnitt 124b und zwischen dem weiteren zweiten Bandabschnitt 124b und dem angrenzenden ersten Bandabschnitt 124a) kann jeweils eine Knickkante 124k ausgebildet sein oder werden, siehe beispielsweise auch die Figuren 3A bis 3C.

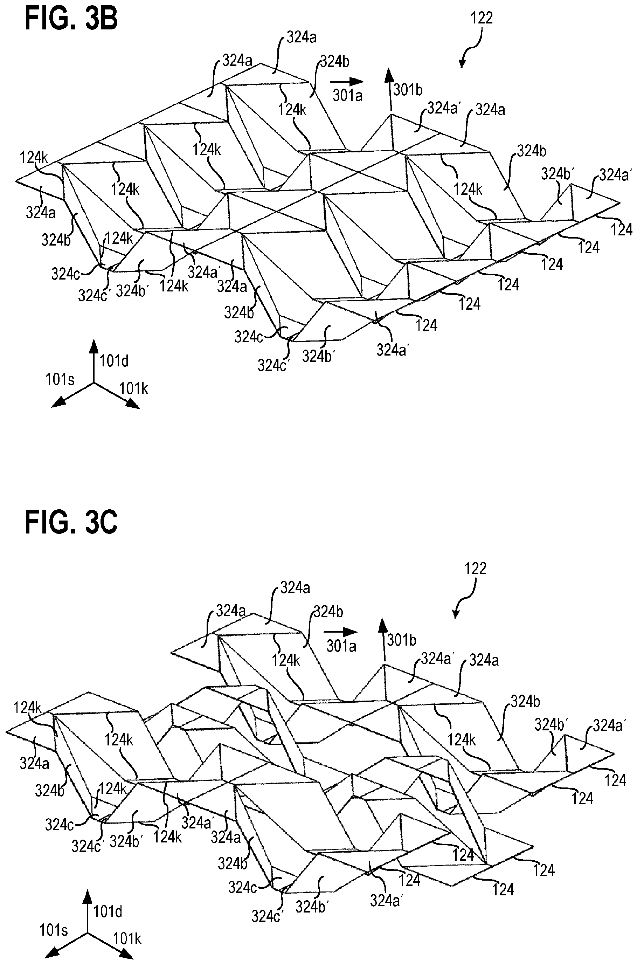

**Fig.3A** veranschaulicht eine Ausgestaltung einer Kernlage 122 bzw. eine Ausgestaltung der Bänder 124 eines Verbundbauteils 100 in einer schematischen Perspektivansicht, gemäß verschiedenen Ausführungsformen. **Fig.3B** und **Fig.3B** zeigen weitere Ausgestaltungen einer Kernlage 122 bzw. der Bänder 124 eines Verbundbauteils 100 in einer schematischen Perspektivansicht, gemäß verschiedenen Ausführungsformen.

Die geometrische Ausgestaltung der Bänder 124 kann mittels verschiedenen Flächenelementen 324a, 324a', 324b, 324b', 324c, 324c' beschrieben werden, wie in Fig.3A sowie auch in Fig.3B und Fig.3C veranschaulich ist. Mit anderen Worten kann ein jeweiliges Band 124 der Kernlage 122 des Verbundbauteils verschiedene Flächenelemente 324a, 324a', 324b, 324b', 324c, 324c' aufweisen bzw. daraus aufgebaut sein.

Die ersten Flächenelemente 324a, 324a' definieren anschaulich die ersten Befestigungsabschnitte 124a des jeweiligen Bandes 124, die zweiten Flächenelemente 324b, 324b' definieren anschaulich die Verbindungsabschnitte 124b des jeweiligen Bandes 124, und die dritten Flächenelemente 324c, 324c' definieren anschaulich die zweiten Befestigungsabschnitte 124c des jeweiligen Bandes 124.

Die ersten und/oder dritten Flächenelemente 324a, 324a', 324c, 324c' können beispielsweise dreieckig oder viereckig (z.B. trapezförmig) ausgestaltet und die zweiten Flächenelemente 324b, 324b' können beispielsweise viereckig (z.B. trapezförmig) ausgestaltet sein. Dementsprechend können die jeweiligen Befestigungsabschnitte 124a, 124c beispielsweise dreieckig oder viereckig (z.B. trapezförmig) ausgestaltet sein und die Verbindungsabschnitte 124b können beispielsweise viereckig (z.B. trapezförmig) ausgestaltet sein.

Gemäß verschiedenen Ausführungsformen können die ersten Flächenelemente 324a, 324a', die den ersten Befestigungsabschnitt 124 definieren, eine größere Breite aufweisen als die dritten Flächenelemente 324c, 324c', die den zweiten Befestigungsabschnitt 124c definieren. Alternativ dazu können die ersten Flächenelemente 324a, 324a', die den ersten Befestigungsabschnitt 124 definieren, eine geringere Breite aufweisen als die dritten Flächenelemente 324c, 324c', die den zweiten Befestigungsabschnitt 124c definieren. Die Breite der Flächenelemente bzw. der entsprechenden Bandabschnitte 124a, 124c kann als Ausdehnung des Bandes in einer Richtung parallel zu der Schussrichtung 101s verstanden werden.

Gemäß verschiedenen Ausführungsformen können die Flächenelemente 324a, 324b, 324c spiegelsymmetrisch (beispielsweise bezüglich einer Ebene parallel zu den Richtungen 101d, 101s bzw. senkrecht zu der Kettrichtung 101k) zu den Flächenelementen 324a',324b', 324c' angeordnet sein. Anschaulich weisen die Bänder 124 somit ein gemeinsames Strukturelement auf definiert von den entsprechenden drei Flächenelementen 324a, 324b, 324c.

Gemäß verschiedenen Ausführungsformen können zwei einander benachbarte Bänder spiegelsymmetrisch (beispielsweise bezüglich einer Ebene parallel zu den Richtungen 101d, 101k bzw. senkrecht zu der Schussrichtung 101s) zueinander ausgestaltet sein.

Wie in Fig.3A veranschaulicht ist, können die Bänder 124 vordefinierte Knickbereiche 324k aufweisen und dementsprechend unter Ausbildung der Knickkanten 124k aufgestellt werden zu einer dreidimensionalen Kernlage 122. Die Dicke der Kernlage 122 (d.h. die Ausdehnung der Kernlage parallel zu der Richtung 101d) kann basierend auf der Ausgestaltung der Flächenelemente 324a, 324b, 324c definiert sein.

Gemäß verschiedenen Ausführungsformen kann jede Knickkante 124k bzw. jeder vordefinierte Knickbereich 324k einer ersten Menge in einem ersten Winkel zu der Kettrichtung 101k ausgerichtet sein und es kann jede Knickkante 124k bzw. jeder vordefinierte Knickbereich 324k einer zweiten Menge in einem zweiten Winkel zu der Kettrichtung 101k ausgerichtet sein, wobei der erste Winkel verschieden von dem zweiten Winkel ist.

Wie in Fig.3A veranschaulicht ist, können die Knickkanten 124k bzw. die vordefinierten Knickbereiche 324k parallel zu einer von zwei voneinander verschiedenen Richtungen 301a, 301b verlaufen. Dabei können beide Richtungen 301a, 301b weder parallel zu der Kettrichtung 101k noch parallel zu der Schussrichtung 101s ausgerichtet sein. Ferner können die beiden Richtungen 301a, 301b senkrecht zueinander sein.

Wie in den Figuren 3A bis 3C veranschaulicht ist, können die Bänder 124 der Kernlage derart ausgestaltet sein, dass die ersten Befestigungsabschnitte 124a und/oder die zweiten Befestigungsabschnitte 124c zweier einander benachbarter Bänder 124 aneinander angrenzen und eine im Wesentlichen geschlossene Befestigungsfläche zum ersten Gewebe 102g bzw. zum zweiten Gewebe 112g bilden.

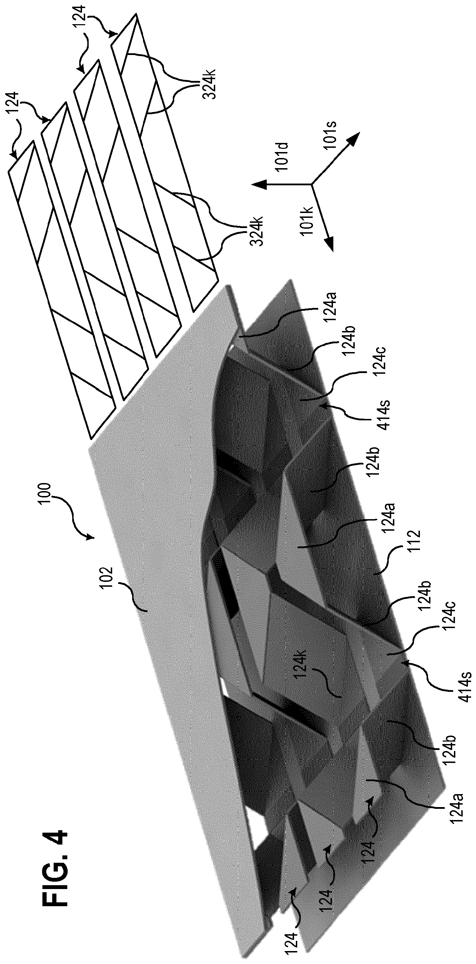

**Fig.4** veranschaulicht ein Verbundbauteil 100 in einer schematischen Perspektivansicht, gemäß verschiedenen Ausführungsformen.

Das Verbundbauteil 100 weist gewebte Decklagen 102, 112 auf, sowie eine Anordnung von geknickten Bändern 124 als Kernlage zwischen den beiden Decklagen 102, 112. Die Kernlage ist bindungstechnisch und damit formschlüssig mit den beiden Decklagen 102, 112 gekoppelt und von einer Vielzahl aufgestellter Bändern 124 gebildet.

Dabei können die Bänder 124 der Kernlage webtechnisch verarbeitet sein oder werden. Vor der webtechnischen Verarbeitung können die Bänder 124 hinsichtlich ihrer späteren Anordnung in der Kernlage vordefinierte Knickbereiche 324k aufweisen (z.B. vorgefaltet sein, perforiert sein, gedünnt sein, etc.). Im Webprozess können die Bänder 124 dann in Längsrichtung (Kettrichtung 101k) der Webvorrichtung (nicht dargestellt) zugeführt werden und formschlüssig mittels Schussfäden 414s an die Decklagen 102, 112 (und/oder Zwischenflächen, nicht dargestellt) angebunden werden. Eine Modifikation des Schusseintragssystems der Webvorrichtung ist beispielsweise nicht notwendig und es kann somit die volle Webleistung erzielt werden.

Gemäß verschiedenen Ausführungsformen erfolgt eine bindungstechnische Kopplung von mindestens einer Kernlage mit mindestens zwei Decklagen. Es versteht sich, dass eine Decklage auch zwischen zwei Kernlagen angeordnet sein kann und somit anschaulich eine Zwischenlage in dem Verbund bildet. Beispielsweise muss eine Decklage nicht eine äußere Lage des Verbundbauteils sein.

Während des Zuführens der Bänder 124 in den Webbereich einer Webvorrichtung hinein können diese in einer Ebene (z.B. parallel zu der Kettrichtung 101k und der Schussrichtung 101s bzw. senkrecht zu der Richtung 101d) geführt werden, wobei die Bänder 124 folglich noch nicht geknickt sind, aber beispielsweise vordefinierte Knickbereiche 324k aufweisen. Nach dem Webprozess können die dann aufgestellten, geknickten Bänder 124 die Kernlage bilden, die zwischen zwei angrenzenden Lagen (als Decklagen bezeichnet) bereitgestellt ist und mit diesen webtechnisch verbunden sind. Die Decklagen 102, 112 sind Gewebelagen oder weisen zumindest jeweils ein

Gewebe auf.

Gemäß verschiedenen Ausführungsformen können die Bänder 124 mittels ein oder mehrerer Walzen in den Webbereich einer Webvorrichtung hinein geführt werden. Zum Beispiel können die Bänder 124 zwischen zwei Walzen in Kontakt mit diesen hindurch geführt sein oder werden auf mehreren Walzen aufliegend transportiert.

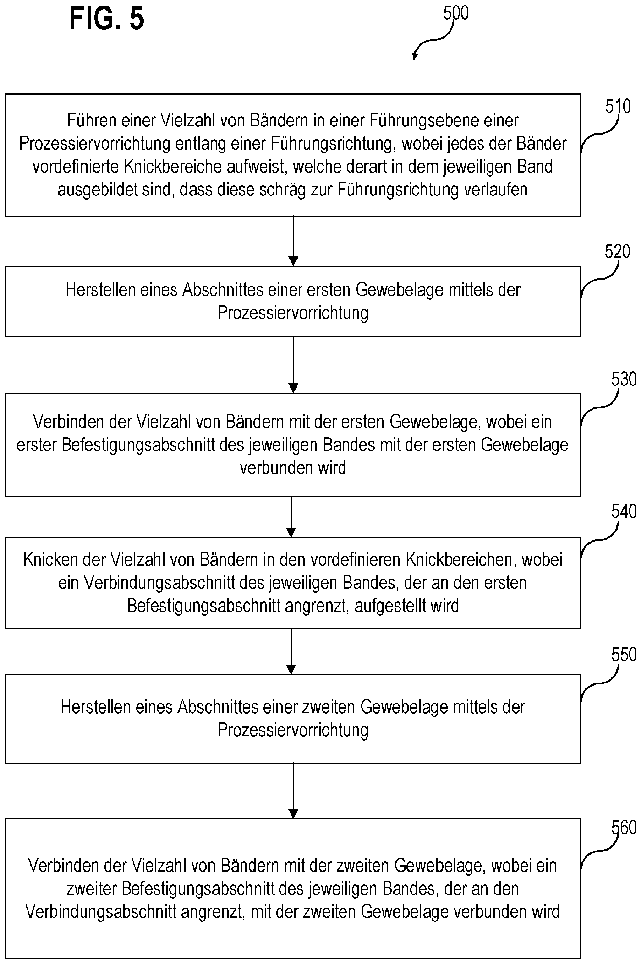

Fig.5 zeigt ein schematisches Ablaufdiagramm eines Verfahrens 500 zum Herstellen eines Verbundbauteils, z.B. des hierin beschriebenen Verbundbauteils 100, gemäß verschiedenen Ausführungsformen.

Das Verfahren 500 zum Herstellen eines erfindungsgemäßen Verbundbauteils weist Folgendes auf: in 510, Führen einer Vielzahl von Bändern 124 in einer Führungsebene einer Prozessiervorrichtung entlang einer Führungsrichtung, wobei jedes der Bänder 124 vordefinierte Knickbereiche 324k aufweist, welche derart in dem jeweiligen Band ausgebildet sind, dass diese schräg zu der Führungsrichtung verlaufen; in 520, Herstellen eines Abschnittes einer ersten Gewebelage 102 mittels der Prozessiervorrichtung; in 530, Verbinden der Vielzahl von Bändern 124 mit der ersten Gewebelage 102, wobei ein erster Befestigungsabschnitt 124a des jeweiligen Bandes 124 mit der ersten Gewebelage verbunden wird; in 540, Knicken der Vielzahl von Bändern 124 in den vordefinierten Knickbereichen 324k, wobei ein Verbindungsabschnitt 124b des jeweiligen Bandes 124, der an den ersten Befestigungsabschnitt 124a angrenzt, aufgestellt wird; in 550, Herstellen eines Abschnittes einer zweiten Gewebelage 112 mittels der Prozessiervorrichtung; und, in 560, Verbinden der Vielzahl von Bändern 124 mit der zweiten Gewebelage 112, wobei ein zweiter Befestigungsabschnitt 124c des jeweiligen Bandes 124, der an den Verbindungsabschnitt 124b angrenzt, mit der zweiten Gewebelage 112 verbunden wird. Dabei kann sich der Verbindungsabschnitt 124b des jeweiligen Bandes von der ersten Gewebelage 102 zu der zweiten Gewebelage 112 erstrecken.

Die aufgestellten Verbindungsabschnitte 124b der Vielzahl von Bändern 124 können einen Abstand 101a zwischen der ersten Gewebelage 102 und der zweiten Gewebelage 112 definieren, siehe Fig.1A.

Im Folgenden werden verschiedene Beispiele beschrieben, welche sich auf das hierin Beschriebene und in den Figuren Dargestellte beziehen.

Beispiel 1 ist ein Verbundbauteil 100, aufweisend: eine erste Decklage 102 aufweisend ein erstes Gewebe 102g; eine zweite Decklage 112 aufweisend ein zweites Gewebe 112g, wobei das erste Gewebe 102g und das zweite Gewebe 112g eine Kettrichtung 101k und eine Schussrichtung 101s definieren; und mehrere Bänder 124, welche zwischen den beiden Decklagen 102, 112 angeordnet sind. Dabei ist jedes der mehreren Bänder 124 entlang der Kettrichtung 101k angeordnet (z.B. sich anschaulich entlang der Kettrichtung 101k erstrecken) und mit dem jeweiligen Gewebe 102g, 112g der ersten Decklage 102 und der zweiten Decklage 112 verbunden. Jedes der Bänder 124 ist mehrfach geknickt, wobei sich die Knickkanten 124k schräg zu der Kettrichtung 101k und/oder schräg zu der Schussrichtung 101s erstrecken.

Die erste Decklage 102 und/oder die zweite Decklage 112 des Verbundbauteils 100 können/kann beispielsweise nur eine Gewebelage aus dem entsprechenden Gewebe aufweisen. Beispielsweise kann ein Verbundbauteil 100 Folgendes aufweisen: eine erste Gewebelage 102g; eine zweite Gewebelage 112g, wobei die erste Gewebelage 102g und die zweite Gewebelage 112g eine Kettrichtung 101k und eine Schussrichtung 101s definieren; und mehrere Bänder 124, welche zwischen den beiden Gewebelagen 102g, 112g angeordnet sind. Dabei erstreckt sich jedes der mehreren Bänder 124 entlang der Kettrichtung 101k und ist (z.B. webtechnisch) mit der jeweiligen Gewebelage 102g, 112g verbunden. Jedes der Bänder 124 ist mehrfach geknickt, wobei sich die Knickkanten 124k schräg zu der Kettrichtung 101k und/oder schräg zu der Schussrichtung 101s erstrecken.

Alternativ dazu können/kann die erste Decklage 102 und/oder die zweite Decklage 112 des Verbundbauteils 100 beispielsweise mehrere Gewebelagen aufweisen aus dem gleichen Gewebe oder aus mehreren verschiedenen Geweben. Beispielsweise kann ein Verbundbauteil 100 Folgendes aufweisen: eine erste Decklage 102 aufweisend eine oder mehrere erste Gewebelagen 102g; eine zweite Decklage 112 aufweisend ein oder mehrere zweites Gewebelagen 112g, wobei mindestens eine der ein oder mehreren ersten Gewebelagen 102g und mindestens eine der ein oder mehreren zweiten Gewebelagen 102g eine Kettrichtung 101k und eine Schussrichtung 101s definieren; und mehrere Bänder 124, welche zwischen den beiden Decklagen 102, 112 angeordnet sind. Dabei erstreckt sich jedes der mehreren Bänder 124 entlang der Kettrichtung 101k und ist mit der mindestens einen ersten Gewebelage 102g der ersten Decklage 102 und der mindestens einen Gewebelage 112g der zweiten Decklage 112 verbunden.

Jedes der mehreren Bänder 124 ist mehrfach geknickt, wobei sich die Knickkanten 124k schräg zu der Kettrichtung 101k und/oder schräg zu der Schussrichtung 101s erstrecken. Zusätzlich zu der mindestens einen Gewebelage kann können/kann die erste Decklage 102 und/oder die zweite Decklage 112 des Verbundbauteils 100 beispielsweise ein oder mehrere weitere Materialschichten oder ähnliches aufweisen. Beispielsweise kann über und/oder unter einer Gewebelage eine Schutzschicht zum Schützen der Gewebelage oder Ähnliches angeordnet sein.

In Beispiel 2 kann das Verbundbauteil 100 gemäß Beispiel 1 ferner aufweisen, dass die Verbindung zwischen dem jeweiligen Band 124 und dem jeweiligen Gewebe 102g, 112g bzw. der jeweiligen Gewebelage 102g, 112g mittels eines Formschlusses erfolgt. Beispielsweise kann eine Formschlussverbindung zwischen Elementen (z.B. Fäden, bandförmigen Elementen, etc.) der jeweiligen Gewebe und jedem der Bänder hergestellt sein oder werden. Beispielsweise kann jedes der Bänder mittels einer Formschlussverbindung mit dem jeweiligen Gewebe verbunden sein oder werden. Beispielsweise kann die Formschlussverbindung (bzw. eine textiltechnische Verbindung) vorzugsweise eine Webverbindung sein.

In Beispiel 3 kann das Verbundbauteil 100 gemäß Beispiel 1 oder 2 ferner aufweisen, dass jedes der mehreren Bänder 124 eine Vielzahl von Befestigungsabschnitten 124a, 124c aufweist, wobei jeder der Befestigungsabschnitte 124a, 124c zwischen zwei einander benachbarten Knickkanten 124k ausgebildet ist.

In Beispiel 4 kann das Verbundbauteil 100 gemäß Beispiel 3 ferner aufweisen, dass jedes der mehreren Bänder 124 eine Vielzahl von Verbindungsabschnitten 124b aufweist, wobei jeder der Verbindungsabschnitte 124b zwischen zwei einander benachbarten Knickkanten 124k ausgebildet ist.

In Beispiel 5 kann das Verbundbauteil 100 gemäß Beispiel 3 und 4 ferner aufweisen, dass die Befestigungsabschnitte 124a, 124c und die Verbindungsabschnitte 124b eines jeweiligen Bandes 124 entlang der Kettrichtung 101k alternierend bereitgestellt sind.

In Beispiel 6 kann das Verbundbauteil 100 gemäß einem der Beispiele 3 bis 5 ferner aufweisen, dass jeder der Befestigungsabschnitte 124a, 124c entweder in das erste Gewebe 102g bzw. die erste Gewebelage der ersten Decklage 102 oder in das zweite Gewebe 112g bzw. die zweite Gewebelage 112g der zweiten Decklage 112 eingewebt ist.

In Beispiel 7 kann das Verbundbauteil 100 gemäß einem der Beispiele 3 bis 6 ferner aufweisen, dass jeder Befestigungsabschnitt 124a einer ersten Menge der Befestigungsabschnitte eine erste Breite aufweist und dass jeder Befestigungsabschnitt 124c einer zweiten Menge der Befestigungsabschnitte eine zweite Breite aufweist, wobei die erste Breite verschieden von der zweiten Breite ist.

In Beispiel 8 kann das Verbundbauteil 100 gemäß einem der Beispiele 3 bis 7 ferner aufweisen, dass jeder der Befestigungsabschnitte 124a, 124c im Wesentlichen plan ausgebildet ist.

In Beispiel 9 kann das Verbundbauteil 100 gemäß Beispiel 4 ferner aufweisen, dass sich jeder der Verbindungsabschnitte 124b entweder von der ersten Decklage 102 zu der zweiten Decklage 112 oder von der zweiten Decklage 112 zu der ersten Decklage 102 erstreckt.

In Beispiel 10 kann das Verbundbauteil 100 gemäß Beispiel 4 oder 9 ferner aufweisen, dass jeder der Verbindungsabschnitte 124b im Wesentlichen plan ausgebildet ist.

In Beispiel 11 kann das Verbundbauteil 100 gemäß einem der Beispiele 1 bis 10 ferner aufweisen, dass mehrere der Knickkanten 124k in einem ersten Winkel zu der Kettrichtung 101k verlaufen und dass mehrere der Knickkanten 124k in einem zweiten Winkel zu der Kettrichtung 101k verlaufen, wobei der erste Winkel verschieden von dem zweiten Winkel ist.

In Beispiel 12 kann das Verbundbauteil 100 gemäß einem der Beispiele 1 bis 11 ferner aufweisen, dass mehrere der Knickkanten 124k parallel zu einer ersten Richtung 301a verlaufen und dass mehrere der Knickkanten 124k parallel zu einer zweiten Richtung 301b verlaufen, wobei die erste Richtung 301a verschieden von der zweiten Richtung 301b ist. Dabei können die erste Richtung 301a und die zweite Richtung 301b senkrecht zueinander verlaufen. Ferner können die erste Richtung 301a und die zweite Richtung 301b weder parallel zu der Kettrichtung 101k noch parallel zu der Schussrichtung 101s verlaufen.

In Beispiel 13 kann das Verbundbauteil 100 gemäß einem der Beispiele 1 bis 12 ferner aufweisen, dass jede der Knickkanten 124k in einem Winkel in einem Bereich von ungefähr 15° bis 75° zu der Kettrichtung 101k verläuft.

In Beispiel 14 kann das Verbundbauteil 100 gemäß einem der Beispiele 1 bis 13 ferner aufweisen, dass zusätzlich zu der (z.B. textiltechnischen) Verbindung eine Klebeverbindung zwischen jedem der mehreren Bänder 124 und dem jeweiligen Gewebe 102g, 112g der beiden Decklagen 102, 112 bzw. den ein oder mehreren Gewebelagen ausgebildet ist.

In Beispiel 15 kann das Verbundbauteil 100 gemäß einem der Beispiele 1 bis 14 ferner aufweisen, dass jedes der mehreren Bänder 124 einen Faserwerkstoff aufweist oder daraus besteht.

In Beispiel 16 kann das Verbundbauteil 100 gemäß Beispiel 15 ferner aufweisen, dass der Faserwerkstoff Pflanzenfasern, Aramidfasern, ultrahochmolekulargewichtiges Polyethylen, Carbonfasern, Glasfasern und/oder Keramikfasern aufweist.

In Beispiel 17 kann das Verbundbauteil 100 gemäß Beispiel 15 oder 16 ferner aufweisen, dass der Faserwerkstoff einen Binder aufweist zum Zusammenhalten der Fasern des Faserwerkstoffs.

In Beispiel 18 kann das Verbundbauteil 100 gemäß einem der Beispiele 15 bis 17 ferner aufweisen, dass der Faserwerkstoff Fasern mit einer durchschnittlichen Faserlänge in einem Bereich von ungefähr 1 mm bis ungefähr 100 mm aufweist.

In Beispiel 19 kann das Verbundbauteil 100 gemäß einem der Beispiele 1 bis 18 ferner aufweisen, dass jedes der mehreren Bänder 124 eine Breite aufweist in einem Bereich von ungefähr 2 mm bis ungefähr 10 cm.

In Beispiel 20 kann das Verbundbauteil 100 gemäß einem der Beispiele 1 bis 19 ferner aufweisen, dass jedes der mehreren Bänder 124 eine Dicke aufweist in einem Bereich von ungefähr 50 µm bis ungefähr 1 cm.

In einer Ausführungsform können die Bänder 124 auch ein Metall aufweisen oder aus Metall bestehen. In einer anderen Ausführungsform können die Bänder 124 auch einen Kunststoff aufweisen oder daraus bestehen. In einer noch anderen Ausführungsform können die Bänder 124 auch ein Verbundmaterial aufweisen oder daraus bestehen, zum Beispiel CFK (carbonfaserverstärkter Kunststoff), GFK (glasfaserverstärkter Kunststoff), oder ein anderes geeignetes Verbundmaterial. Dabei können die vordefinierten Knickbereiche 324k beispielsweise mittels einer Perforation erzeugt werden. Ferner können die vordefinierten Knickbereiche 324k auch eine geringere Dicke aufweisen als der Rest des Bandes (anschaulich kann die Materialstärke reduziert sein).

Beispiel 21 ist das Verfahren zum Herstellen des erfindungsgemäßen Verbundbauteils, das Verfahren aufweisend: Führen einer Vielzahl von Bändern in einer Führungsebene einer Prozessiervorrichtung entlang einer Führungsrichtung, wobei jedes der mehreren Bänder vordefinierte Knickbereiche aufweist, welche derart in dem jeweiligen Band ausgebildet sind, dass diese schräg zu der Führungsrichtung verlaufen; Herstellen eines Abschnittes einer ersten Gewebelage mittels der Prozessiervorrichtung; Verbinden der Vielzahl von Bändern mit der ersten Gewebelage, wobei ein erster Befestigungsabschnitt des jeweiligen Bandes mit der ersten Gewebelage verbunden wird; Knicken der Vielzahl von Bändern in den vordefinieren Knickbereichen, wobei ein Verbindungsabschnitt des jeweiligen Bandes, der an den ersten Befestigungsabschnitt angrenzt, aufgestellt wird; Herstellen eines Abschnittes einer zweiten Gewebelage mittels der Prozessiervorrichtung; und Verbinden der Vielzahl von Bändern mit der zweiten Gewebelage, wobei ein zweiter Befestigungsabschnitt des jeweiligen Bandes, der an den Verbindungsabschnitt angrenzt, mit der zweiten Gewebelage verbunden wird, wobei sich der Verbindungsabschnitt des jeweiligen Bandes von der ersten Gewebelage zu der zweiten Gewebelage erstreckt.

In Beispiel 22 kann das Verfahren gemäß Beispiel 21 ferner aufweisen, dass die aufgestellten Verbindungsabschnitte der Vielzahl von Bändern einen Abstand zwischen der ersten Gewebelage und der zweiten Gewebelage definieren.

Beispiel 23 ist ein Verbundbauteil 100, aufweisend: eine erste Decklage 102 aufweisend ein erstes Gewebe 102g; eine zweite Decklage 112 aufweisend ein zweites Gewebe 112g, wobei das erste Gewebe 102g und das zweite Gewebe 112g eine Kettrichtung 101k und eine Schussrichtung 101s definieren; mehrere Bänder 124, welche zwischen den beiden Decklagen 102, 112 entlang der Kettrichtung 101k angeordnet und mit dem jeweiligen Gewebe 102g, 112g der ersten Decklage 102 und der zweiten Decklage 112 formschlüssig verbunden sind, wobei jedes der mehreren Bänder 124 mehrfach geknickt ist und wobei sich die Knickkanten 124k schräg zu der Kettrichtung 101k und/oder schräg zu der Schussrichtung 101s erstrecken.

Beispiel 24 ist ein Verbundbauteil 100, aufweisend: eine erste Decklage 102 aufweisend ein erstes textiles Flächengebilde 102g; eine zweite Decklage 112 aufweisend ein zweites textiles Flächengebilde 112g; und mehrere Bänder 124, welche zwischen den beiden Decklagen 102, 112 angeordnet sind. Dabei kann jedes der mehreren Bänder 124 entlang einer Richtung 101k angeordnet sein und mit dem jeweiligen textilen Flächengebilde 102g, 112g der ersten Decklage 102 und der zweiten Decklage 112 textiltechnisch verbunden sein. Jedes der Bänder 124 kann mehrfach geknickt sein, wobei sich die Knickkanten 124k schräg zu der Richtung 101k erstrecken.

Ein textiles Flächengebilde kann beispielsweise eines von Folgendem aufweisen oder daraus bestehen: ein oder mehrere Gewebe, ein oder mehrere Gewirke, ein oder mehrere Gestricke, ein oder mehrere Geflechte, ein oder mehrere Nähgewirke, ein oder mehrere Vliesstoffe, und/oder ein oder mehrere Filze.

Bei einem textiltechnischen Verbinden der textilen Flächengebilde 102g, 112g der Decklagen 102, 112 mit den dazwischen angeordneten Bändern 124 können mehrere Formschlussverbindungen erzeugt werden. Anschaulich kann ein textiltechnisches Verbinden auf einer Formschlussverbindung basieren.

Das hierin beschriebene Verbundbauteil 100 ist beispielsweise derart ausgestaltet, dass dieses widerstandsfähig gegen Delamination ist. Ferner kann das hierin beschriebene Verbundbauteil 100 gemäß einigen Ausführungsformen mittels eines automatisierten, einstufigen Prozesses in reproduzierbarer Qualität gewebt werden.

Gemäß verschiedenen Ausführungsformen kann das hierin beschriebene Verbundbauteil 100 (z.B. das Verbundbauteil 100 gemäß den Beispielen 1 bis 20) ferner zumindest teilweise mit mindestens einem Füllmaterial gefüllt sein. Beispielsweise kann eine zwischen den beiden Decklagen 102, 112 und den Bändern 124 ausgebildete Hohlraumstruktur teilweise oder vollständig mit mindestens einem Füllmaterial gefüllt sein oder werden. Als Füllmaterial kann beispielsweise ein Schaum, eine Schüttung, oder ein anderes geeignetes Material verwendet werden.

Gemäß verschiedenen Ausführungsformen kann das hierin beschriebene Verbundbauteil 100 (z.B. das Verbundbauteil 100 gemäß den Beispielen 1 bis 20) ferner mindestens eine dritte Decklage mit einem dritten Gewebe aufweisen und mehrere weitere Bänder 124, welche zwischen der zweiten Decklage 112 und der dritten Decklage angeordnet sind. Dabei kann jedes der mehreren weiteren Bänder 124 entlang der Kettrichtung 101k angeordnet sein und (z.B. webtechnisch) mit den jeweiligen angrenzenden Decklagen (z.B. der zweiten und der dritten Decklage) verbunden sein. Jedes der weiteren Bänder 124 kann mehrfach geknickt sein, wobei sich die Knickkanten 124k schräg zu der Kettrichtung 101k und/oder schräg zu der Schussrichtung 101s erstrecken. Dabei kann ein Abstand der ersten Decklage von der zweiten Decklage verschieden von einem Abstand der zweiten Decklage von der dritten Decklage sein. Anschaulich können beispielsweise verschiedene Abstände zwischen den Decklagen eingestellt sein oder werden, z.B. mittels Anpassens der Bandvorfaltung.

Gemäß verschiedenen Ausführungsformen kann das hierin beschriebene Verbundbauteil 100 (z.B. das Verbundbauteil 100 gemäß den Beispielen 1 bis 20) ferner mindestens eine dritte Gewebelage aufweisen und mehrere weitere Bänder 124, welche zwischen der zweiten Gewebelage und der dritten Gewebelage angeordnet sind. Dabei kann jedes der mehreren weiteren Bänder 124 entlang der Kettrichtung 101k angeordnet sein und (z.B. webtechnisch) mit den jeweiligen angrenzenden Gewebelagen (z.B. der zweiten und der dritten Gewebelage) verbunden sein. Jedes der weiteren Bänder 124 kann mehrfach geknickt sein, wobei sich die Knickkanten 124k schräg zu der Kettrichtung 101k und/oder schräg zu der Schussrichtung 101s erstrecken. Dabei kann ein Abstand der ersten Gewebelage von der zweiten Gewebelage verschieden von einem Abstand der zweiten Gewebelage von der dritten Gewebelage sein. Anschaulich können beispielsweise verschiedene Abstände zwischen den Gewebelagen eingestellt sein oder werden, z.B. mittels Anpassens der Bandvorfaltung.

Gemäß verschiedenen Ausführungsformen kann das hierin beschriebene Verbundbauteil 100 (z.B. das Verbundbauteil 100 gemäß den Beispielen 1 bis 20) ferner eine gekrümmte Form aufweisen. Dabei können die beiden Decklagen 102, 112 entsprechend gekrümmt sein. Die Krümmungsrichtung kann beispielsweise die Kettrichtung oder die Schussrichtung sein.

Gemäß verschiedenen Ausführungsformen kann das hierin beschriebene Verbundbauteil 100 (z.B. das Verbundbauteil 100 gemäß den Beispielen 1 bis 20) ferner derart ausgestaltet sein, dass die beiden Decklagen 102, 112 (bzw. die Gewebelagen) in einem ersten Bereich des Verbundbauteils 100 einen ersten Abstand voneinander aufweisen und in einem zweiten Bereich des Verbundbauteils 100 einen zweiten Abstand voneinander aufweisen, wobei der erste Abstand verschieden von dem zweiten Abstand ist. Anschaulich können die beiden Decklagen des Verbundbauteils schräg zueinander (d.h. nicht parallel zueinander) ausgerichtet sein. Der variable Abstand kann beispielsweise mittels Anpassens der Bandvorfaltung der mehreren Bänder entsprechend eingestellt werden.

Gemäß verschiedenen Ausführungsformen kann das hierin beschriebene Verbundbauteil 100 (z.B. das Verbundbauteil 100 gemäß den Beispielen 1 bis 20) ferner derart ausgestaltet sein, dass dieses zusätzlich zu der ersten Decklage und der zweiten Decklage eine dritte Decklage aufweist, wobei die dritte Decklage ein drittes Gewebe aufweist oder daraus besteht. Dabei können mehrere weitere Bänder zwischen der zweiten Decklage und der dritten Decklage entlang der Kettrichtung angeordnet sein und mit dem jeweiligen Gewebe der zweiten Decklage und der dritten Decklage formschlüssig verbunden sein, wobei jedes der mehreren weiteren Bänder mehrfach geknickt sein kann und wobei sich die Knickkanten schräg zu der Kettrichtung und/oder schräg zu der Schussrichtung erstrecken können. Alternativ dazu können die mehreren weitere Bänder entlang einer anderen Richtung als der Kettrichtung angeordnet sein, z.B. entlang der Schussrichtung oder entlang einer anderen Richtung schräg zur Kettrichtung. Gemäß verschiedenen Ausführungsformen kann die Anordnung (z.B. der Abstand benachbarter Bänder) der mehreren zwischen der zweiten und dritten Decklage angeordneten (weiteren) Bänder verschieden von der Anordnung der zwischen der ersten und zweiten Decklage angeordneten Bänder sein. Gemäß verschiedenen Ausführungsformen kann die Ausgestaltung (z.B. die Materialstärke, die Breite, der Abstand benachbarter Verbindungsabschnitte, das Material, etc.) der mehreren zwischen der zweiten und dritten Decklage angeordneten (weiteren) Bänder verschieden von der Ausgestaltung der zwischen der ersten und zweiten Decklage angeordneten Bänder sein.

Gemäß verschiedenen Ausführungsformen können zumindest zwei der hierin beschriebenen Verbundbauteile 100 (z.B. das Verbundbauteil 100 gemäß den Beispielen 1 bis 20) derart miteinander (z.B. übereinander, z.B. direkt aufeinander) verbunden sein, dass sich die Kettrichtung 101k des ersten Verbundbauteils 100 in eine andere Richtung erstreckt als die Kettrichtung 101k des zweiten Verbundbauteils 100. Anschaulich können die beiden Verbundbauteile 100 gegeneinander verdreht (z.B. um 45° oder 90° relativ zueinander verdreht) aneinander befestigt sein, wobei die erste Lage des zweiten Verbundbauteils zu der ersten Lage des ersten Verbundbauteils hin gerichtet ist. Die Verdrehung der beiden Verbundbauteile relativ zueinander erfolgt anschaulich um eine Achse die senkrecht zu beiden Kettrichtungen sein kann. Somit kann ein stabileres Gesamtverbundbauteil gebildet werden.

## Patentansprüche

1. Verbundbauteil (100), aufweisend:
eine erste Decklage (102) aufweisend ein erstes Gewebe (102g);
eine zweite Decklage (112) aufweisend ein zweites Gewebe (112g), wobei das erste Gewebe (102g) und das zweite Gewebe (112g) eine Kettrichtung (101k) und eine Schussrichtung (101s) definieren;
mehrere Bänder (124), welche zwischen den beiden Decklagen (102, 112) entlang der Kettrichtung (101k) angeordnet und mit dem jeweiligen Gewebe (102g, 112g) der ersten Decklage (102) und der zweiten Decklage (112) formschlüssig verbunden sind, wobei jedes der mehreren Bänder (124) mehrfach geknickt ist und wobei sich die Knickkanten (124k) schräg zu der Kettrichtung (101k) und/oder schräg zu der Schussrichtung (101s) erstrecken.

2. Verbundbauteil (100) gemäß Anspruch 1,
wobei jedes der Bänder mittels mehrerer Formschlussverbindungen abschnittsweise mit dem jeweiligen Gewebe verbunden sind, wobei jede der Formschlussverbindungen eine Webverbindung ist.

3. Verbundbauteil (100) gemäß Anspruch 1 oder 2,
wobei jedes der mehreren Bänder (124) eine Vielzahl von Befestigungsabschnitten (124a, 124c) aufweist, wobei jeder der Befestigungsabschnitte (124a, 124c) zwischen zwei einander benachbarten Knickkanten (124k) ausgebildet ist; und
wobei jedes der mehreren Bänder (124) eine Vielzahl von Verbindungsabschnitten (124b) aufweist, wobei jeder der Verbindungsabschnitte (124b) zwischen zwei einander benachbarten Knickkanten (124k) ausgebildet ist.

4. Verbundbauteil (100) gemäß Anspruch 3,
wobei jeder der Befestigungsabschnitte (124a, 124c) entweder in das erste Gewebe (102g) der ersten Decklage (102) oder in das zweite Gewebe (112g) der zweiten Decklage (112) eingewebt ist.

5. Verbundbauteil (100) gemäß Anspruch 3 oder 4,
wobei jeder Befestigungsabschnitt (124a) einer ersten Menge der Befestigungsabschnitte eine erste Breite aufweist und wobei jeder Befestigungsabschnitt (124c) einer zweiten Menge der Befestigungsabschnitte eine zweite Breite aufweist, wobei die erste Breite verschieden von der zweiten Breite ist.

6. Verbundbauteil (100) gemäß einem der Ansprüche 3 bis 5,
wobei sich jeder der Verbindungsabschnitte (124b) entweder von der ersten Decklage (102) zu der zweiten Decklage (112) oder von der zweiten Decklage (112) zu der ersten Decklage (102) erstreckt.

7. Verbundbauteil (100) gemäß einem der Ansprüche 3 bis 6,
wobei jeder der Befestigungsabschnitte (124a, 124c) und jeder der Verbindungsabschnitte (124b) im Wesentlichen plan ausgebildet ist.

8. Verbundbauteil (100) gemäß einem der Ansprüche 1 bis 7,
wobei mehrere der Knickkanten (124k) in einem ersten Winkel zu der Kettrichtung (101k) verlaufen und wobei mehrere der Knickkanten (124k) in einem zweiten Winkel zu der Kettrichtung (101k) verlaufen, wobei der erste Winkel verschieden von dem zweiten Winkel ist.

9. Verbundbauteil (100) gemäß einem der Ansprüche 2 bis 7,
wobei zusätzlich eine Klebeverbindung zwischen jedem der mehreren Bänder (124) und dem jeweiligen Gewebe (102g, 112g) der beiden Decklagen (102, 112) ausgebildet ist.

10. Verbundbauteil (100) gemäß einem der Ansprüche 1 bis 9,
wobei die beiden Decklagen (102, 112) in einem ersten Bereich des Verbundbauteils (100) einen ersten Abstand voneinander aufweisen und in einem zweiten Bereich des Verbundbauteils (100) einen zweiten Abstand voneinander aufweisen, wobei der erste Abstand verschieden von dem zweiten Abstand ist.

11. Verbundbauteil (100) gemäß einem der Ansprüche 1 bis 10,
wobei zumindest einige der mehreren Bänder (124) entlang der Kettrichtung (101k) angeordnet sind, und/oder
wobei zumindest einige der mehreren Bänder (124) entlang der Schussrichtung (101s) angeordnet sind.

12. Verbundbauteil (100) gemäß einem der Ansprüche 1 bis 11,
wobei zumindest einige der mehreren Bänder (124) einen von folgenden Werkstoffen aufweisen oder daraus bestehen:
• einen Faserwerkstoff, vorzugsweise aufweisend Pflanzenfasern, Aramidfasern, Polyethylen, Carbonfasern, Glasfasern und/oder Keramikfasern;
• ein Metall;
• einen Kunststoff.

13. Verbundbauteil (100) gemäß einem der Ansprüche 1 bis 12,
wobei jedes der mehreren Bänder (124) eine Dicke aufweist in einem Bereich von ungefähr 50 µm bis ungefähr 1 cm.

14. Verbundbauteil (100) gemäß einem der Ansprüche 1 bis 13,
wobei die Knickkanten in vordefinierten Knickbereichen (324k) des jeweiligen Bandes gebildet sind, und wobei jeder der jeweiligen Knickbereiche (324k) eine Perforation und/oder eine reduzierte Materialstärke aufweist zum Knicken des jeweiligen Bandes.

15. Verfahren zum Herstellen eines Verbundbauteils, das Verfahren aufweisend:
Führen mehrerer Bänder in einer Führungsebene einer Prozessiervorrichtung entlang einer Führungsrichtung, wobei jedes der mehreren Bänder vordefinierte Knickbereiche aufweist, welche derart in dem jeweiligen Band ausgebildet sind, dass diese schräg zu der Führungsrichtung verlaufen;
Herstellen eines Abschnittes einer ersten Gewebelage mittels der Prozessiervorrichtung;
Verbinden der mehreren Bänder mit der ersten Gewebelage, wobei ein erster Befestigungsabschnitt jedes Bandes der mehreren Bänder mit der ersten Gewebelage verbunden wird;
Knicken der mehreren Bänder in den vordefinieren Knickbereichen, wobei ein Verbindungsabschnitt jedes Bandes der mehreren Bänder, der an den jeweiligen ersten Befestigungsabschnitt angrenzt, aufgestellt wird;
Herstellen eines Abschnittes einer zweiten Gewebelage mittels der Prozessiervorrichtung; und
Verbinden der mehreren Bänder mit der zweiten Gewebelage, wobei ein zweiter Befestigungsabschnitt jedes Bandes der mehreren Bänder, der an den jeweiligen Verbindungsabschnitt angrenzt, mit der zweiten Gewebelage verbunden wird.

## Claims

1. A composite component (100), comprising:
a first cover layer (102) comprising a first fabric (102g);
a second cover layer (112) comprising a second fabric (112g), wherein the first fabric (102g) and the second fabric (112g) define a warp direction (101k) and a weft direction (101s);
several tapes (124) arranged between the two cover layers (102, 112) along the warp direction (101k) and connected in a form-fit manner to the respective fabric (102g, 112g) of the first cover layer (102) and the second cover layer (112), wherein each of the several tapes (124) is kinked several times and wherein the kink edges (124k) extend obliquely to the warp direction (101k) and/or obliquely to the weft direction (101s).

2. Composite component (100) according to claim 1,
wherein each of the tapes is connected in portions to the respective fabric by means of several form-fit connections, wherein each of the form-fit connections is a woven connection.

3. Composite component (100) according to claim 1 or 2,
wherein each of the several tapes (124) comprises a plurality of fastening portions (124a, 124c), each of the fastening portions (124a, 124c) being formed between two adjacent kink edges (124k); and
wherein each of the several tapes (124) comprises a plurality of connection portions (124b), each of the connection portions (124b) being formed between two adjacent kink edges (124k).

4. Composite component (100) according to claim 3,
wherein each of the fastening portions (124a, 124c) is woven into either the first fabric (102g) of the first cover layer (102) or the second fabric (112g) of the second cover layer (112).

5. Composite component (100) according to claim 3 or 4,
wherein each fastening portion (124a) of a first set of the fastening portions has a first width and wherein each fastening portion (124c) of a second set of the fastening portions has a second width, the first width being different from the second width.

6. Composite component (100) according to any one of claims 3 to 5,
wherein each of the fastening portions (124b) extends either from the first cover layer (102) to the second cover layer (112) or from the second cover layer (112) to the first cover layer (102).

7. Composite component (100) according to any one of claims 3 to 6,
wherein each of the fastening portions (124a, 124c) and each of the connection portions (124b) is formed to be substantially planar.

8. Composite component (100) according to any one of claims 1 to 7,
wherein several of the kink edges (124k) extend at a first angle to the warp direction (101k) and wherein several of the kink edges (124k) extend at a second angle to the warp direction (101k), the first angle being different from the second angle.

9. Composite component (100) according to any one of claims 2 to 7,
wherein an adhesive bond is additionally formed between each of the several tapes (124) and the respective fabric (102g, 112g) of the two cover layers (102, 112).

10. Composite component (100) according to any one of claims 1 to 9,
wherein the two cover layers (102, 112) have a first distance from each other in a first region of the composite component (100) and have a second distance from each other in a second region of the composite component (100), the first distance being different from the second distance.

11. Composite component (100) according to any one of claims 1 to 10,
wherein at least some of the several tapes (124) are arranged along the warp direction (101k), and/or
wherein at least some of the several tapes (124) are arranged along the weft direction (101s).

12. Composite component (100) according to any one of claims 1 to 11,
wherein at least some of the several tapes (124) comprise or consist of any one of the following materials:
• a fiber material, preferably comprising plant fibers, aramid fibers, polyethylene, carbon fibers, glass fibers, and/or ceramic fibers;
• a metal;
• a synthetic material.

13. Composite component (100) according to any one of claims 1 to 12,
wherein each of the several tapes (124) has a thickness in a range from about 50 µm to about 1 cm.

14. Composite component (100) according to any one of claims 1 to 13,
wherein the kink edges are formed in predefined kink regions (324k) of the respective tape, and wherein each of the respective kink regions (324k) comprises a perforation and/or a reduced material thickness for kinking the respective tape.

15. Method of manufacturing a composite component, the method comprising:
guiding several tapes in a guiding plane of a processing apparatus along a guiding direction, each of the several tapes comprising predefined kink regions formed in the respective tape such that they extend obliquely to the guiding direction;
manufacturing a portion of a first fabric layer by means of the processing apparatus;
connecting the several tapes to the first fabric layer, wherein a first fastening portion of each tape of the several tapes is connected to the first fabric layer;
kinking the several tapes in the predefined kink regions, wherein a connection portion of each tape of the several tapes, which adjoins the respective first fastening portion, is erected;
manufacturing a portion of a second fabric layer by means of the processing apparatus; and
connecting the several tapes to the second fabric layer, wherein a second fastening portion of each tape of the several tapes, which adjoins the respective connection portion, is connected to the second fabric layer.

## Revendications

1. Composant composite (100), comprenant :
une première couche de recouvrement (102) présentant un premier tissu (102g) ;
une deuxième couche de recouvrement (112) présentant un deuxième tissu (112g), le premier tissu (102g) et le deuxième tissu (112g) définissant une direction de chaîne (101k) et une direction de trame (101s) ;
plusieurs bandes (124), qui sont disposées entre les deux couches de recouvrement (102, 112) le long de la direction de chaîne (101k) et qui sont reliées par complémentarité de forme au tissu respectif (102g, 112g) de la première couche de recouvrement (102) et de la deuxième couche de recouvrement (112), chacune des plusieurs bandes (124) étant pliée plusieurs fois et les bords de pliage (124k) s'étendant obliquement par rapport à la direction de chaîne (101 k) et/ou obliquement par rapport à la direction de trame (101s).

2. Composant composite (100) selon la revendication 1,
dans lequel chacune des bandes est reliée par parties au tissu respectif au moyen de plusieurs liaisons par complémentarité de forme, chacune des liaisons par complémentarité de forme étant une liaison tissée.

3. Composant composite (100) selon la revendication 1 ou 2,
dans lequel chacune des plusieurs bandes (124) comprend une pluralité de parties de fixation (124a, 124c), chacune des parties de fixation (124a, 124c) étant formée entre deux bords de pliage adjacents (124k) ; et
dans lequel chacune des plusieurs bandes (124) comprend une pluralité de parties de liaison (124b), chacune des parties de liaison (124b) étant formée entre deux bords de pliage adjacents (124k).

4. Composant composite (100) selon la revendication 3,
dans lequel chacune des parties de fixation (124a, 124c) est tissée soit dans le premier tissu (102g) de la première couche de recouvrement (102), soit dans le deuxième tissu (112g) de la deuxième couche de recouvrement (112).

5. Composant composite (100) selon la revendication 3 ou 4,
dans lequel chaque partie de fixation (124a) d'un premier ensemble des parties de fixation présente une première largeur et dans lequel chaque partie de fixation (124c) d'un deuxième ensemble des parties de fixation présente une deuxième largeur, la première largeur étant différente de la deuxième largeur.

6. Composant composite (100) selon l'une quelconque des revendications 3 à 5,
dans lequel chacune des parties de liaison (124b) s'étend soit de la première couche de recouvrement (102) à la deuxième couche de recouvrement (112), soit de la deuxième couche de recouvrement (112) à la première couche de recouvrement (102).

7. Composant composite (100) selon l'une quelconque des revendications 3 à 6,
dans lequel chacune des parties de fixation (124a, 124c) et chacune des parties de liaison (124b) est configurée de manière sensiblement plane.

8. Composant composite (100) selon l'une quelconque des revendications 1 à 7,
dans lequel plusieurs des bords de pliage (124k) s'étendent selon un premier angle par rapport à la direction de chaîne (101k) et dans lequel plusieurs des bords de pliage (124k) s'étendent selon un deuxième angle par rapport à la direction de chaîne (101k), le premier angle étant différent du deuxième angle.

9. Composant composite (100) selon l'une quelconque des revendications 2 à 7,
dans lequel une liaison adhésive est en outre formée entre chacune de la pluralité de bandes (124) et le tissu respectif (102g, 112g) des deux couches de recouvrement (102, 112) .

10. Composant composite (100) selon l'une quelconque des revendications 1 à 9,
dans lequel les deux couches de recouvrement (102, 112) présentent une première distance entre elles dans une première zone du composant composite (100) et une deuxième distance entre elles dans une deuxième zone du composant composite (100), la première distance étant différente de la deuxième distance.

11. Composant composite (100) selon l'une quelconque des revendications 1 à 10,
dans lequel au moins certaines des plusieurs bandes (124) sont disposées selon la direction de chaîne (101k), et/ou
dans lequel au moins certaines des plusieurs bandes (124) sont disposées selon la direction de trame (101s).

12. Composant composite (100) selon l'une quelconque des revendications 1 à 11,
dans lequel au moins certaines des plusieurs bandes (124) comprennent ou consistent en un des matériaux suivants :
• un matériau fibreux, de préférence comprenant des fibres végétales, des fibres d'aramide, du polyéthylène, des fibres de carbone, des fibres de verre et/ou des fibres céramiques ;
• un métal ;
• un plastique.

13. Composant composite (100) selon l'une quelconque des revendications 1 à 12,
dans lequel chacune des plusieurs bandes (124) a une épaisseur comprise dans une plage allant d'environ 50 µm à environ 1 cm.

14. Composant composite (100) selon l'une quelconque des revendications 1 à 13,
dans lequel les bords de pliage sont formés dans des zones de pliage prédéfinies (324k) de la bande respective, et dans lequel chacune des zones de pliage respectives (324k) comprend une perforation et/ou une épaisseur de matériau réduite pour plier la bande respective.

15. Procédé de fabrication d'un composant composite, le procédé comprenant :
le guidage de plusieurs bandes dans un plan de guidage d'un dispositif de traitement le long d'une direction de guidage, chacune des plusieurs bandes ayant des zones de pliage prédéfinies formées dans la bande respective de telle sorte qu'elles s'étendent obliquement par rapport à la direction de guidage ;
la fabrication d'une partie d'une première couche de tissu au moyen du dispositif de traitement ;
la liaison des plusieurs bandes à la première couche de tissu, une première partie de fixation de chaque bande des plusieurs bandes étant reliée à la première couche de tissu ;
le pliage des plusieurs bandes dans les zones de pliage prédéfinies, où une partie de liaison de chaque bande des plusieurs bandes, avoisinant la première partie de fixation respective, est mise en place ;
la fabrication d'une partie d'une deuxième couche de tissu au moyen du dispositif de traitement ; et
la liaison des plusieurs bandes à la deuxième couche de tissu, où une deuxième partie de fixation de chaque bande des plusieurs bandes, avoisinant la partie de liaison respective, est reliée à la deuxième couche de tissu.
